# EUROPÄISCHE PATENTANMELDUNG

(11) **EP 1 393 612 A1**
(43) Veröffentlichungstag der Anmeldung: **03.03.2004**
(21) Anmeldenummer: 03019124.1
(22) Anmeldetag: 23.08.2003
(51) Int. Cl.: A01D 34/82, A01D 34/68

(54) **Rasenmäher**

(30) Priorität: 28.08.2002 DE 10240198
(71) Anmelder: Kress, Werner, D-89077 Ulm (DE)
(72) Erfinder: Kress, Werner, D-89077 Ulm (DE)
(74) Vertreter: Weitzel, Wolfgang, Dr.-Ing.

(57) **Zusammenfassung**

Die Erfindung betrifft einen Rasenmäher mit den folgenden Merkmalen:
- mit einer Schneideinrichtung;
- mit einem die Schneideinrichtung tragenden Mähdeck (15);
- mit einem Verbrennungsmotor (1);
- mit einem dem Verbrennungsmotor (1) zugeordneten Schalldämpfersystem (12), der einen Einlass (11) zum Aufnehmen und einen Auslass (12.1) zum Abgeben des Abgasstromes aufweist;
- mit einem an den Auslass (12.1) angeschlossenen Auslassstutzen (13);
- der Auslassstutzen (13) ist mit seinem Endabschnitt (13.3) nach unten gerichtet;
- die Mündung (13.4) des Auslassstutzens (13.3) befindet sich unmittelbar über dem Rasen.

## Beschreibung

Die Erfindung betrifft einen Rasenmäher mit Motorantrieb. Dabei ist der als Motor ein Verbrennungsmotor, zum Beispiel ein Zweitakter oder ein Viertakter.

Ein solcher Rasenmäher weist eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Motor und Schneideinrichtung sind von einem Gehäuse umschlossen. Das Gehäuse kann von einem Fahrgestell getragen sein oder selbst Räder aufweisen, die auf dem Rasen abrollen. Am Gehäuse ist ein Holm befestigt, mit dem der Rasenmäher manipuliert wird. Die Bedienungsperson greift dabei am Holm an, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf. Es gibt aber auch Rasenmäher, bei denen die genannten Räder einen Antrieb aufweisen, so dass die Bedienungsperson mittels des Holms lediglich noch die Steuerung auszuführen braucht.

Das Gehäuse weist einen Auslass auf, durch welchen der grasführende Luftstrom austritt. Der Luftstrom kann dabei an einer Seite des Rasenmähers austretendas heißt seitlich der Bewegungsbahn, die der Rasenmäher ausführt. In neuerer Zeit sind aber Rasenmäher im allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass mit einer Klappe versehen, die um eine Schwenkachse schwenkbar gelagert ist. Der grasführende Luftstrom prallt gegen die Platte und öffnet diese, so dass der grasführende Luftstrom austreten kann.

Ein äußerst wichtiger Aspekt bei der Konstruktion eines Rasenmähers ist dessen Geräusch während des Betriebes. Ein besonders Problem besteht darin, dass Rasenmäher im allgemeinen in Wohngebieten betrieben werden. Weiterhin werden sie während der Freizeit des Besitzers betrieben. Dies ist aber gerade jene Zeit, in der andere Personen den Lärm als besonders störend empfinden. Deshalb haben sich die Konstrukteure schon von jeher bemüht, die Geräuschentwicklung von Rasenmähern zu minimieren. Dabei führen die Maßnahmen zur Geräuschverminderung häufig zu einer Verschlechterung des Wirkungsgrades des Rasenmähers. Die beiden Ziele Geräuschminderung und Effizienz des Rasenmähers kollidieren somit häufig miteinander.

Bei Rasenmähern lassen sich drei verschiedene Geräuschquellen identifizieren, die alle zu einem Gesamt-Geräuschpegel beitragen: der Motor, mechanische Bauteile, die sich lösen und einander anschlagen können, sowie aerodynamisch relevante Bauteile.

Beim Motor ist verständlicherweise die Bauart von großer Bedeutung. Ein Verbrennungsmotor wird immer einen relativ hohen Geräuschpegel erzeugen. Dabei wird das abgegebene Geräusch durch entsprechende Motorkapselung gedämmt.

Auch sind besondere Schalldämpfer vorgesehen. Ein solcher Schalldämpfer weist einen Einlass zum Aufnehmen des schwingungsbehafteten, geräuschabgebenden Abgasstromes auf, ferner einen Auslass zum Abgeben dieses Abgasstromes.

Es wurden bereits große Anstrengungen unternommen, den auf den Motor zurückgehenden Geräuschpegel abzusenken. Diese Anstrengungen reichen jedoch nicht aus.

Die Geräuschdämmung wird nämlich in nächster Zeit verschärften gesetzgeberischen Anforderungen unterliegen. Die derzeitigen Geräuschpegel liegen bei 96 db und darüber. Die Anforderungen wurden dadurch verschärft, dass künftig jedes einzelne Exemplar einer Baureihe den Bestimmungen genügen muss, so dass die Hersteller aus Sicherheitsgründen den Geräuschpegel unter den gesetzlich vorgegebenen Wert auslegen müssen.

Die Erfindung geht aus von einem Rasenmäher gemäß DE 35 32 830 C2. Ein solcher Rasenmäher weist die Merkmale 1.1 bis 1.4 von Anspruch 1 auf.

Der Erfindung liegt die Aufgabe zugrunde, einen Rasenmäher, umfassend eine Schneideinrichtung, einen Motor, ein Gehäuse und gegebenenfalls einen Grasfangbehälter, derart zu gestalten, dass die motoren-bedingten Geräusche deutlich vermindert werden.

Diese Aufgabe wird durch die Merkmale von Anspruch 1 gelöst.

Der Erfinder hat Folgendes erkannt:
Eine entscheidende Verbesserung wird dann erzielt, wenn der aus dem Schalldämpfer austretende und in die Umgebung eintretende Abgasstrom gegen die Rasenfläche umgelenkt wird, so dass er auf diese auftrifft. Die Auftreffrichtung soll dabei möglichst vertikal sein. Der Erfinder hat weiterhin erkannt, dass eine Rasenfläche in idealer Weise als Schallschlucker geeignet ist.

In den Unteransprüchen 2 - 7 sind besonders vorteilhafte Ausführungsformen des Rasenmähers nach Anspruch 1 angegeben.

Durch die Erfindung ist es möglich, den motor-bedingten Geräuschpegel zu reduzieren.

Die Erfindung ist anhand der Zeichnung näher erläutert. Darin ist im einzelnen Folgendes dargestellt:
- Figur 1: zeigt in perspektivischer Darstellung einen Rasenmäher im Betriebszustand.
- Figur 2: zeigt ein Schalldämpfersystem in einer Seitenansicht.
- Figur 3: zeigt eine Schnittansicht durch den Gegenstand von Figur 2.

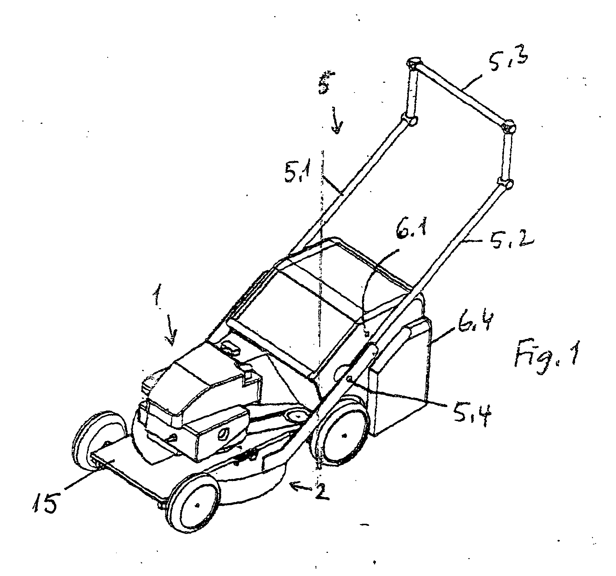

Der in Figur 1 gezeigte Rasenmäher weist die folgenden wesentlichen Teile auf:

Als Motor ist ein Viertakt-Benzinmotor 1 vorgesehen, von dem hier nur eine Abdeckung erkennbar ist.

Man erkennt ein Gehäuse 2. Dieses umschließt mit seinem unteren, zylindrischen Teil eine hier nicht erkennbare Schneideinrichtung. Die Abdeckung des Motors 1 kann integraler Bestandteil des Gehäuses 2 sein.

Der Rasenmäher weist vier Räder 3 auf. Diese können vom Motor angetrieben sein. Dies ist jedoch nicht notwendigerweise der Fall.

Der Grasfangbehälter 4 ist an das Gehäuse abnehmbar angesetzt und verriegelt. Das Gehäuse 2 hat einen Auslass, und der Grasfangbehälter hat einen Einlassbeide hier nicht erkennbar. Auslass und Einlass sind deckungsgleich, so dass das Innere des Gehäuses 2 und das Innere des Grasfangbehälters 4 miteinander in leitender Verbindung stehen. Der Grasfangbehälter ist außerdem perforiert. Als Perforation können Schlitze oder Bohrungen oder sonstige Löcher dienen.

Man erkennt ferner einen Führungsholm 5. Dieser umfasst zwei Schenkel 5.1, 5.2 sowie einen diese beiden miteinander verbindenden Steg 5.3. Der Führungsholm 5 ist am Gehäuse 2 befestigt.

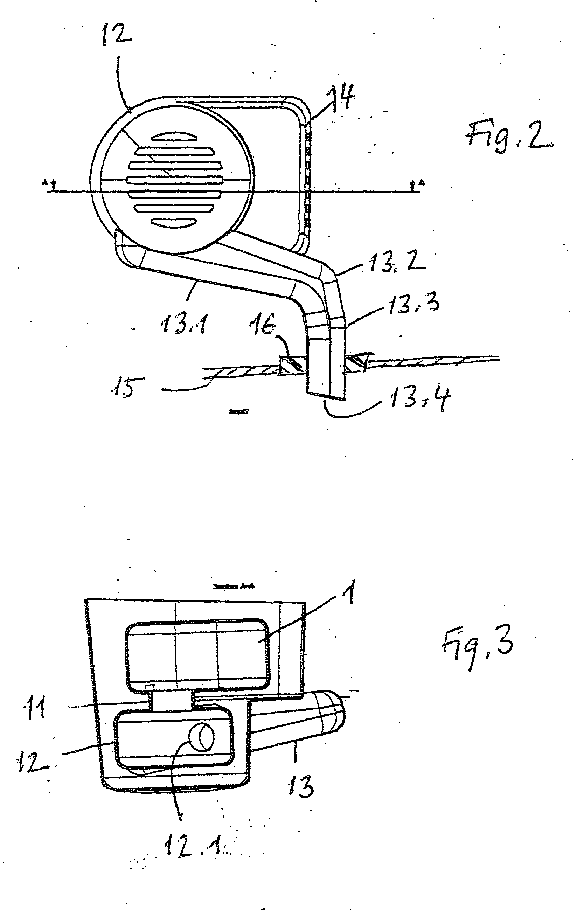

Aus den Figuren 2 und 3 erkennt man im einzelnen Folgendes:

Der Motor 1 weist eine horizontale, hier nicht dargestellte Welle auf. Ein ebenfalls horizontal verlaufender Rohrstutzen 11 nimmt die Motor-Abgase auf und leitet diese weiter an ein Schalldämpfersystem 12. Das Schalldämpfersystem hat die Gestalt einer zylindrischen Dose.

Das Schalldämpfersystem hat einen Auslass 12.1, an den ein Auslassstutzen 13 angeschlossen ist. Der Auslassstutzen 13 umfasst einen ersten Abschnitt 13.1, der geneigt von oben nach unten verläuft, ferner einen Krümmer 13.2 sowie einen Endabschnitt 13.3. Der Endabschnitt 13.3 verläuft im wesentlichen vertikal, so dass seine Mündung 13.4 gegen den Rasen (hier nicht dargestellt) gerichtet ist.

Ein thermisches Schutzgehäuse 14 umgibt den Motor 1 und den Schalldämpfer 12.

Der Endabschnitt 13.3 des Auslassstutzens 13 kann durch das Mähdeck 15 hindurchgeführt und mittels einer elastischen Lagerung hierin fixiert sein oder seitlich am Mähdeck vorbeigeführt werden.

Durch die Leitung der Abgase innerhalb des Schalldämpfersystems unddirekt gegen den Rasen hin mittels des Endabschnittes 13.3 des Auslassstutzens wird der Schallpegel, der auf das Motorgeräusch zurückgeht, wesentlich abgesenkt.

## Patentansprüche

1. Rasenmäher
1.1 mit einer Schneideinrichtung;
1.2 mit einem die Schneideinrichtung tragenden Mähdeck (15);
1.3 mit einem Verbrennungsmotor (1);
1.4 mit einem dem Verbrennungsmotor (1) zugeordneten Schalldämpfersystem (12), der einen Einlass (11) zum Aufnehmen und einen Auslass (12.1) zum Abgeben des Abgasstromes aufweist; **gekennzeichnet durch** die folgenden Merkmale:
1.5 an den Auslass (12.1) ist ein Auslassstutzen (13) angeschlossen;
1.6 der Auslassstutzen ist mit seinem Endabschnitt (13.3) nach unten gerichtet;
1.7 die Mündung (13.4) des Auslassstutzens (13) befindet sich unmittelbar über dem Rasen.

2. Rasenmäher nach Anspruch 1, **dadurch gekennzeichnet, dass** das Schalldämpfersystem (12) die Gestalt einer zylindrischen Dose hat.

3. Rasenmäher nach Anspruch 2, **dadurch gekennzeichnet, dass** der Einlass (11) der Dose (12) horizontal verläuft und sich auf der motornahen Stirnseite befindet, und dass der Auslass (12.1) der Dose (12) an die Mantelfläche der Dose (12) angeschlossen ist.

4. Rasenmäher nach einem der Ansprüche 1 bis 3, **dadurch gekennzeichnet, dass** eine motoreigene Auspuffanlage und das Schalldämpfersystem (12) in Reihe geschaltet sind.

5. Rasenmäher nach einem der Ansprüche 1 bis 4, **dadurch gekennzeichnet, dass** der Auslassstutzen (13) wenigstens einen Krümmer (13.2) aufweist.

6. Rasenmäher nach einem der Ansprüche 1 bis 5, **dadurch gekennzeichnet, dass** der Auslassstutzen (13) durch das Mähdeck (15) hindurchgeführt und von diesem getragen ist.

7. Rasenmäher nach Anspruch 6, **dadurch gekennzeichnet, dass** zwischen Mähdeck (15) und Auslassstutzen (13) ein Schwingungsdämpfer (16) vorgesehen ist.
